# FASCICULE DE BREVET EUROPEEN

(11) **EP 3 408 924 B1**
(45) Date de publication et mention de la délivrance du brevet: **08.07.2020**
(21) Numéro de dépôt: 17707597.5
(22) Date de dépôt: 25.01.2017
(51) Int. Cl.: H02K 5/10, H02K 11/33

(54) **DISPOSITIF DE PULSION D'AIR A MOTEUR ÉLECTRIQUE ET SUPPORT MOTEUR ASSOCIE MUNI DE MOYENS D'ÉTANCHÉITÉ POUR LE PASSAGE DE CONNECTEURS DU MOTEUR**
LUFTIMPULSVORRICHTUNG MIT EINEM ELEKTROMOTOR UND ZUGEHÖRIGEM MOTORTRÄGER MIT ABDICHTMITTELN FÜR DEN DURCHGANG VON MOTORANSCHLÜSSEN
AIR PULSE DEVICE WITH AN ELECTRIC MOTOR AND ASSOCIATED MOTOR CARRIER WITH SEALING MEANS FOR THE PASSAGE OF MOTOR CONNECTORS

(30) Priorité: 26.01.2016 FR 1650596
(43) Date de publication de la demande: 05.12.2018
(73) Titulaire: Valeo Systemes Thermiques, 78320 Le Mesnil Saint Denis (FR)
(72) Inventeur: LE GOFF, Morgan, 78322 Le Mesnil Saint-Denis-Cedex (FR); CAPOULUN, Geoffroy, 78322 Le Mesnil Saint-Denis-Cedex (FR); RUDLOFF, Emmanuel, 78322 Le Mesnil Saint-Denis-Cedex (FR)
(74) Mandataire: Tran, Chi-Hai
(86) Numéro de dépôt international: PCT/FR2017/050163
(87) Numéro de publication internationale: WO 2017/129900

(56) Documents cités:
- EP-A1- 2 214 293
- FR-A1- 2 920 491

## Description

La présente invention relève du domaine des dispositifs de pulsion d'air, équipant notamment les installations de ventilation, de chauffage et/ou de climatisation pour véhicule automobile. La présente invention relève plus particulièrement des modalités de connexion entre un moteur électrique et une carte de commande électronique régulant le fonctionnement du moteur, que comportent de tels dispositifs de pulsion d'air.

Les installations de ventilation, de chauffage et/ou de climatisation équipant les véhicules automobiles comportent une ou plusieurs conduites à circulation d'air et sont équipées d'au moins un dispositif de pulsion d'air pour générer un flux d'air à travers l'installation. Un tel dispositif de pulsion d'air comporte un moteur électrique d'entraînement en rotation notamment d'une hélice ou turbine et un moyen de commande régulant le fonctionnement du moteur. Le moteur, comprenant un rotor et un stator, est monté sur un support d'implantation du dispositif de pulsion d'air sur une paroi de l'installation.

La turbine est alors placée à l'intérieur d'une conduite de l'installation pour générer le flux d'air à son travers. Le moyen de commande procure l'alimentation en courant électrique du moteur et contrôle sa vitesse de rotation, notamment par variation du courant électrique. Le contrôle du fonctionnement du moteur permet de réguler la vitesse de rotation de la turbine et par suite de réguler les caractéristiques aérodynamiques du flux d'air circulant à travers l'installation.

Il est connu d'installer le moyen de commande à proximité du moteur. A cet effet, une carte de commande électronique est montée sur le support. Une telle carte de commande est classiquement formée d'une plaque électriquement isolante comportant des pistes électriquement conductrices et équipée de composants électroniques.

Un dissipateur thermique est, de préférence, interposé entre la carte de commande et le support, pour dissiper la chaleur produite par les composants électroniques équipant la carte de commande.

Le moteur et la carte de commande sont alors respectivement disposés à des faces opposées du support d'implantation du dispositif. La connexion électrique entre le moteur et la carte de commande est procurée par mise en contact de l'extrémité libre des connecteurs équipant le moteur avec des contacteurs équipant la carte de commande. Les connecteurs sont couramment agencés en languettes métalliques s'étendant depuis le moteur vers la carte de commande, notamment parallèlement à l'axe de rotation du moteur. Les contacteurs sont couramment formés de languettes métalliques ménagées sur la face de la carte de commande opposée à sa face d'implantation sur le support. Les contacteurs sont fixés à la carte de commande et ils comportent une patte flexible pour leur mise en contact avec les connecteurs.

L'extrémité libre de chacun des connecteurs traverse alors successivement le support, le dissipateur thermique, puis la carte de commande. A cet effet, des passages des connecteurs vers les contacteurs sont respectivement ménagés à travers le support, le cas échéant à travers le dissipateur thermique, puis à travers la carte de commande. Les connecteurs sont introduits à travers lesdits passages et débouchent au-delà de la carte de commande pour être placée en contact avec les contacteurs et relier électriquement le moteur et la carte de commande.

Dans ce contexte, il est à prendre en considération que la turbine, voire aussi le moteur, sont placés à l'intérieur d'une conduite de l'installation et que le flux d'air acheminé à travers la conduite est potentiellement humide. Par suite, de l'humidité voire des gouttelettes d'eau en provenance du moteur, peuvent s'infiltrer vers la carte de commande à travers les passages des connecteurs ménagés dans le support. Pour protéger la carte de commande vis-à-vis d'une éventuelle infiltration d'eau pouvant s'écouler à travers le support, une solution connue consiste à interposer un organe d'étanchéité entre le moteur et le support.

L'organe d'étanchéité comporte des ouvertures pour ménager un passage des connecteurs à son travers, en prolongement des passages ménagés dans le support. Par suite de l'introduction des connecteurs à travers les ouvertures, l'organe d'étanchéité enserre les connecteurs pour faire obstacle au passage de l'humidité.

Il est apparu à l'usage que les moyens d'étanchéité à l'encontre d'une infiltration d'humidité vers la carte de commande méritaient d'être améliorés, en tenant compte de diverses contraintes, économiques et d'encombrement notamment. Plus particulièrement, une contrainte réside dans le fait que le dispositif de pulsion d'air est recherché le plus compact possible, au moins suivant la direction d'extension des connecteurs, pour faciliter son implantation sur l'installation.

L'amélioration des moyens d'étanchéité est recherchée dans un contexte de connecteurs formés en lamelles métalliques significativement étendues. L'extension significative des connecteurs les rend flexibles et par suite sujets à déformation, au moins suivant la direction d'extension de leur partie terminale. Une telle déformation des connecteurs est susceptible d'être provoquée lors de manipulations individuelles du moteur, préalablement ou par suite de son montage sur le support, et/ou d'être provoquée plus spécifiquement lors de leur introduction à l'intérieur des passages ménagés notamment à travers le support.

En outre le caractère métallique des connecteurs les rend tranchants, avec pour conséquence d'induire un risque de détérioration de l'organe d'étanchéité lors de l'introduction des connecteurs à son travers. Les détériorations provoquées par les connecteurs sur l'organe d'étanchéité peuvent affecter par la suite la protection de la carte de commande vis-à-vis d'une infiltration d'humidité.

Le document FR2920491A décrit un dispositif de pulsion d'air suivant le préambule de la revendication 1.

Le document EP2214293 décrit un dispositif de pulsion d'air comportant un moteur électrique dont chaque connecteur 26 est entouré par un joint 49. Chaque joint 49 est interposé entre un connecteur 26 et un logement 19 aménagé dans le support du moteur.

La présente invention vise dans ce contexte à rechercher des solutions permettant de certifier une interdiction d'infiltration d'humidité depuis le moteur et le support vers la carte de commande par suite de l'introduction des connecteurs à travers l'organe d'étanchéité.

Ainsi selon la présente invention, le dispositif de pulsion d'air est du type agencé en étant apte à équiper une installation de ventilation, de chauffage et/ou de climatisation d'un véhicule automobile.

Un tel dispositif de pulsion d'air comporte un support sur lequel sont installés un moteur électrique, notamment d'entraînement d'une turbine, et une carte de commande électronique régulant le fonctionnement du moteur.

Le moteur est préférentiellement un moteur électromagnétique dont le stator est pourvu de connecteurs, par exemple au nombre de trois dans le cas d'un moteur triphasé, étant entendu que ce nombre peut varier sans sortir du contexte de l'invention. La carte électronique est notamment formée d'une plaque électriquement isolante comportant des pistes électriquement conductrices et équipée de composants électroniques. La régulation du fonctionnement du moteur par la carte de commande est avantageusement procurée par variation du courant électrique transmis par la carte de commande pour alimenter le moteur en énergie électrique de puissance.

Le moteur est équipé de connecteurs allongés s'étendant par exemple parallèlement à l'axe de rotation du moteur. Les connecteurs s'étendent plus particulièrement depuis leur extrémité proximale de raccordement au stator vers leur extrémité distale de mise en contact avec des contacteurs équipant la carte de commande. Une partie terminale des connecteurs traversent le support le long de canaux respectifs. Les extrémités distales des connecteurs coopèrent avec des contacteurs respectifs équipant la carte de commande, pour procurer la liaison électrique entre le moteur et la carte de commande par suite de la mise en contact entre l'extrémité distale des connecteurs et les contacteurs. L'extrémité distale d'un connecteur est comprise comme étant l'extrémité des connecteurs placée en contact avec les contacteurs et par suite disposée à l'opposée à l'extrémité proximale des connecteurs rendue solidaire d'une phase du moteur.

Le support est équipé d'au moins un organe d'étanchéité enserrant individuellement la partie terminale des connecteurs. L'organe d'étanchéité est notamment issu d'un matériau élastomère lui conférant une souplesse apte à enserrer les connecteurs par suite de leur passage à travers l'organe d'étanchéité. Les connecteurs traversent l'organe d'étanchéité le long d'ouvertures respectives ménagées en prolongement des canaux formés à travers le support. Lesdites ouvertures ménagent ainsi des passages respectifs des connecteurs à travers l'organe d'étanchéité, qui les enserrent alors par suite de sa déformation élastique.

Un dissipateur thermique est interposé entre le support et la carte de commande. Un tel échangeur de chaleur est dédié au refroidissement de la carte de commande. Le dissipateur thermique comporte des couloirs de passages respectifs des connecteurs à son travers. De tels couloirs sont ménagés en prolongement des canaux et des ouvertures. Ainsi, les connecteurs traversent le support à travers les canaux et l'organe d'étanchéité à travers les ouvertures, puis traversent le dissipateur thermique à travers les couloirs pour s'étendre vers les contacteurs. L'extrémité distale des connecteurs est alors placée en contact avec les contacteurs pour relier électriquement le moteur à la carte de commande.

Dans ce contexte, le dispositif de pulsion d'air suivant la présente demande est principalement reconnaissable en ce que l'organe d'étanchéité comprend des éléments d'étanchéité interposés entre le support et le dissipateur thermique, en prolongement transversal vers l'extérieur des canaux. La notion de transversal est bien entendu comprise relativement à la notion d'extension du canal, ou en d'autres termes relativement à la direction d'extension des connecteurs ou encore relativement à la direction d'introduction des connecteurs à travers les canaux.

Ainsi, une étanchéité est procurée non seulement entre le connecteur et le support, mais aussi directement entre le support et le dissipateur thermique. Une éventuelle humidité est ainsi interdite de passage vers la carte de commande, tant une humidité s'écoulant le long des connecteurs qu'une humidité environnant le support.

Il est à prendre en considération l'organisation structurelle du support et/ou du dissipateur thermique, notamment vis-à-vis des agencements respectifs de leurs faces en regard l'une sur l'autre. En effet, de tels agencements potentiellement complexes rendent délicate l'interposition d'un joint plat s'étendant sur l'ensemble des surfaces respectives des faces du support et du dissipateur thermique l'une sur l'autre.

C'est pourquoi, il est à relever que les éléments d'étanchéité sont judicieusement ménagés dans des espaces limités à l'environnement proche des canaux. Ainsi, les éléments d'étanchéité peuvent être de structure simple et d'un encombrement limité. En outre, le choix d'implanter les éléments d'étanchéité sur le support dans l'environnement des canaux permet de préserver efficacement et à moindres coûts la carte de commande de toute humidité, tant en provenance du moteur qu'en provenance de l'environnement extérieur du support. De tels moindres coûts sont obtenus en simplifiant la structure des éléments d'étanchéité par suite de leur interposition entre le support et le dissipateur thermique dans un espace limité à leurs débouchés en prolongement les uns des autres.

Par suite, un autre avantage est procuré pour simplifier les modalités d'étanchéité préservant la carte de commande de toute humidité en provenance du moteur et/ou de l'environnement du support. En effet, la disposition des éléments d'étanchéité aux débouchés distaux des canaux permet de mutualiser les moyens d'étanchéité interposés entre les canaux et les connecteurs avec les moyens d'étanchéité interposés entre le support et le dissipateur thermique. Il en ressort encore un gain de simplification de l'agencement structurel propre aux éléments d'étanchéité et une réduction des coûts liés à leur obtention.

A cet effet, il peut être avantageusement mis à profit les moyens d'étanchéité interposés entre le support et les connecteurs pour former les éléments d'étanchéité. Plus spécifiquement, les éléments d'étanchéité sont de préférence respectivement ménagés aux débouchés distaux des canaux orientés vers le dissipateur thermique, en étant chacun pourvus d'une dite ouverture.

Dès lors, un même moyen d'étanchéité constitutif de l'organe d'étanchéité peut être exploité pour procurer d'une part l'étanchéité entre les connecteurs et le support et d'autre part l'étanchéité entre le support et le dissipateur thermique. Par suite, l'organisation globale des moyens d'étanchéité préservant la carte de commande d'une humidité en est simplifiée.

Il est souhaité restreindre l'extension de l'ensemble formé par le support, l'organe d'étanchéité et le dissipateur thermique suivant la direction d'introduction des connecteurs à l'intérieur des canaux. A cet effet, suivant la présente invention le dissipateur thermique comporte avantageusement des logements de réceptions respectives de fûts incorporés au support et s'étendant en saillie vers la carte de commande. Dans ce contexte, les évidements des fûts ménagent respectivement les canaux. Par suite de leur introduction à l'intérieur des logements, les fûts débouchent respectivement sur les couloirs ménagés à travers le dissipateur thermique.

A cet effet, le fond des logements est ouvert à la face distale de l'échangeur orientée vers la carte de commande, en ménageant les couloirs. Les ouvertures ménagées en fond des logements sont préservées de toute humidité de par l'étanchéité procurée entre les canaux et les connecteurs, et entre le support et le dissipateur thermique par l'intermédiaire des éléments d'étanchéité.

Selon une forme de réalisation, les éléments d'étanchéité sont de préférence interposés en compression entre la paroi extérieure des fûts et la paroi du dissipateur thermique délimitant les logements, par suite de l'introduction des fûts à l'intérieur des logements. L'étanchéité ainsi procurée entre le support et le dissipateur thermique est particulièrement efficace.

Les logements sont de préférence évasés vers leur débouché proximal orienté vers le support. Ainsi, les logements ménagent avantageusement des rampes de compression progressive des éléments d'étanchéité entre la paroi extérieure des fûts et la paroi du dissipateur thermique délimitant les logements.

Plus particulièrement, les éléments d'étanchéité sont agencés en ailettes issues d'un matériau élastomère. De telles ailettes sont avantageusement souples pour permettre leur mise en compression entre les fûts et les logements par suite de leur emboîtement les uns dans les autres provoquant un rabat des ailettes placées en interposition entre eux.

Les ailettes s'étendent notamment vers l'extérieur des canaux, transversalement à la direction d'introduction des connecteurs à l'intérieur des canaux. Par suite de l'introduction des fûts à l'intérieur des logements, de telles ailettes peuvent être repoussées longitudinalement contre les parois extérieures des fûts suivant la direction d'introduction des connecteurs à l'intérieur des canaux. Par suite, les ailettes se trouvent comprimées entre les fûts et les parois de l'échangeur délimitant les logements suivant une extension significative procurant une étanchéité efficace entre le support et le dissipateur thermique.

En d'autres termes dans le cas avantageux où les canaux sont ménagés par lesdits fûts, les ailettes s'étendent largement transversalement au-delà vers l'extérieur de la paroi extérieure des fûts. Une telle extension des ailettes permet leur rabat contre la paroi extérieure des fûts par suite de leur emboîtement à l'intérieur des logements.

Selon une forme de réalisation, l'organe d'étanchéité comprend des masses en élastomère respectivement disposées au moins en partie à l'intérieur des canaux et chacune munie d'une dite ouverture. Les masses en élastomère sont de préférence respectivement disposées aux débouchés distaux des canaux, pour simplifier l'agencement des éléments d'étanchéité dans le cadre de la mutualisation des moyens d'étanchéité précédemment visée.

De telles masses en élastomère sont ainsi placées en interposition entre les connecteurs et les canaux pour interdire le passage de toute humidité en provenance du moteur. Les masses en élastomère enserrent les connecteurs par suite de leur introduction dans les canaux, et peuvent être avantageusement d'une extension longitudinale significative le long des canaux pour procurer au mieux l'étanchéité entre les connecteurs et le support.

Les masses en élastomère peuvent être incorporées au support par scellement postérieurement à leur obtention par moulage. Cependant, les conditions proposées d'obtention de l'étanchéité au moins entre le support et les connecteurs, mais aussi entre le support et le dissipateur thermique, rend avantageusement possible leur surmoulage sur le support à l'intérieur des canaux. Ainsi, les masses en élastomère sont de préférence incorporées au support par surmoulage à l'intérieur des canaux.

Les éléments d'étanchéité peuvent être avantageusement issus des masses en élastomère. Au moins un élément d'étanchéité est prévu, mais on comprend qu'une pluralité d'éléments, sous forme d'ailettes notamment, peuvent être agencés successivement le long de chacune de ces masses en élastomère. Plus particulièrement, les ailettes peuvent être avantageusement incorporées de moulage aux masses en élastomère.

De préférence, chacune des masses en élastomère comporte au moins une lèvre ménagée à l'intérieur de l'ouverture. Ladite au moins une lèvre est placée sur le trajet du connecteur introduit à l'intérieur du canal. De par sa souplesse typique, la lèvre s'efface sous l'effet de la poussée exercée par le connecteur contre elle par suite de son introduction à l'intérieur du canal. La lèvre est alors refoulée par le connecteur vers la paroi interne de la masse en élastomère.

Ainsi, la masse en élastomère est préservée de toute blessure par le connecteur. L'étanchéité entre les connecteurs et le support est procurée par la mise en compression du connecteur entre les bords opposés de la lèvre. La lèvre se trouve ainsi comprimée entre le connecteur et la paroi de la masse en élastomère.

En outre, l'expansion transversale de la masse en élastomère étant contenue par la paroi du support ménageant le canal, l'enserrement du connecteur par l'organe d'étanchéité en est renforcé par suite de sa mise en compression entre les bords opposés de la lèvre.

Dans ce contexte, les éléments d'étanchéité sont avantageusement respectivement ménagés en prolongement transversal de lèvres distales des masses en élastomère disposées au débouché distal des canaux. Les éléments d'étanchéité et les lèvres distales forment ainsi un même corps en élastomère.

Les éléments d'étanchéité sont incorporés de moulage aux lèvres distales en s'étendant sensiblement dans un même plan orthogonal à l'extension des canaux. Bien entendu, l'extension des éléments d'étanchéité orthogonalement à l'extension des canaux est considérée au moins préalablement au montage entre le support et le dissipateur thermique.

Selon une forme particulière de réalisation, l'organe d'étanchéité comprend un organe en élastomère s'étendant en interposition entre les faces en regard du support et du dissipateur thermique. L'extension de l'organe en élastomère est potentiellement restreinte sans nécessairement s'étendre le long de la totalité des faces en regard du support et du dissipateur thermique.

Il est proposé d'incorporer l'organe en élastomère aux masses en élastomère, en les reliant entre elles. L'organe en élastomère peut s'étendre au moins partiellement le long des faces en regard du support et du dissipateur thermique.

Pour permettre l'extension de l'organe en élastomère entre les masses en élastomère, les fûts comportent des ouvertures latérales ou des dégagements latéraux ménagés à travers leurs parois respectives. De telles ouvertures ou dégagements ménagent des passages pour l'organe en élastomère en prise sur les masses en élastomère.

Dans ce contexte, l'organe d'étanchéité est constitué d'un corps monobloc en élastomère rapporté sur le support par scellement ou plus avantageusement par surmoulage. Le corps monobloc est composé au moins des masses en élastomère et des éléments d'étanchéité, voire aussi le cas échéant de l'organe en élastomère.

Il est à relever que selon une forme avantageuse de réalisation, chacune des masses en élastomère comporte au moins une chambre ménagée entre la lèvre distale et une lèvre amont disposées à distance longitudinale l'une de l'autre le long du canal. Une telle chambre constitue un organe d'interdiction d'une infiltration d'humidité par capillarité de l'une à l'autre desdites lèvres à l'intérieur du canal. Une telle infiltration d'humidité par capillarité risque en effet d'autoriser le passage de l'humidité vers la carte de commande.

La chambre ménage un espace d'accueil du refoulement par le connecteur de la lèvre amont placée sur le trajet d'introduction du connecteur à l'intérieur de la masse en élastomère, en amont de la lèvre distale. La distance de séparation entre la lèvre distale et la lèvre amont place la lèvre amont refoulée à distance longitudinale de la lèvre distale, un écart étant ménagé entre elles.

Par ailleurs, au moins la partie terminale de chacun des connecteurs comporte avantageusement un corps périphérique formant une interface d'enserrement des connecteurs par les masses en élastomère. Un tel corps périphérique procure un enserrement des connecteurs par la masse en élastomère en évitant de la blesser en raison du caractère tranchant de la lamelle métallique formant essentiellement le connecteur.

Les corps sont notamment en matière plastique, de préférence thermodurcissable, et sont avantageusement ménagés par surmoulage autour des connecteurs. En outre, les corps forment avantageusement des organes de rigidification des connecteurs à l'encontre de leur déformation suivant la direction d'extension de leur partie terminale.

La rigidification des connecteurs procurée par les corps permet de limiter voire d'éviter leur déformation. Pour rappel, une éventuelle déformation est susceptible d'affecter le positionnement adéquat des connecteurs par rapport au support et par suite rend possible la formation de blessures sur les masses en élastomère par les connecteurs.

Il est à relever que suivant une orientation transversale donnée d'extension des ouvertures, la distance de séparation entre deux bords opposés des lèvres équipant chacune des ouvertures est notamment inférieure à l'épaisseur du corps et de préférence supérieure à l'épaisseur de l'extrémité distale des connecteurs. Une libre traversée des ouvertures par les extrémités distales des connecteurs est alors procurée, la dimension transversale des extrémités distales des connecteurs pouvant alors être significativement inférieure à celle desdites ouvertures. Ainsi, les masses en élastomère sont préservées de toute blessure par les connecteurs par suite de leur passage à travers les ouvertures.

Des exemples de réalisation de la présente invention vont maintenant être décrits en relation avec les figures des planches annexées, dans lesquelles :
- la figure 1 est une représentation schématique en coupe axiale d'un premier exemple de réalisation d'un dispositif de pulsion d'air selon la présente invention ;
- la figure 2 est composée de deux schémas (a) et (b), représentant en coupe axiale respectivement en vue éclatée pour le schéma (a) et en vue assemblée pour le schéma (b), un détail du dispositif de pulsion d'air représenté sur la figure 1, ledit détail illustrant des modalités de jonction étanche entre un support de moteur et un dissipateur thermique équipant le dispositif de pulsion d'air ;
- la figure 3 est une illustration partielle en perspective d'un connecteur participant du dispositif de raccordement électrique entre un moteur et une carte de commande équipant le dispositif de pulsion d'air représenté sur la figure 1 ; et
- la figure 4 est une illustration semblable à celle de la figure 2 (a) d'une variante de réalisation de l'invention.

Il faut tout d'abord noter que les figures exposent la présente invention de manière détaillée et selon des modalités particulières de sa mise en œuvre, et que lesdites figures peuvent bien entendu servir le cas échéant à mieux définir la présente invention, tant dans ses particularités que dans sa généralité.

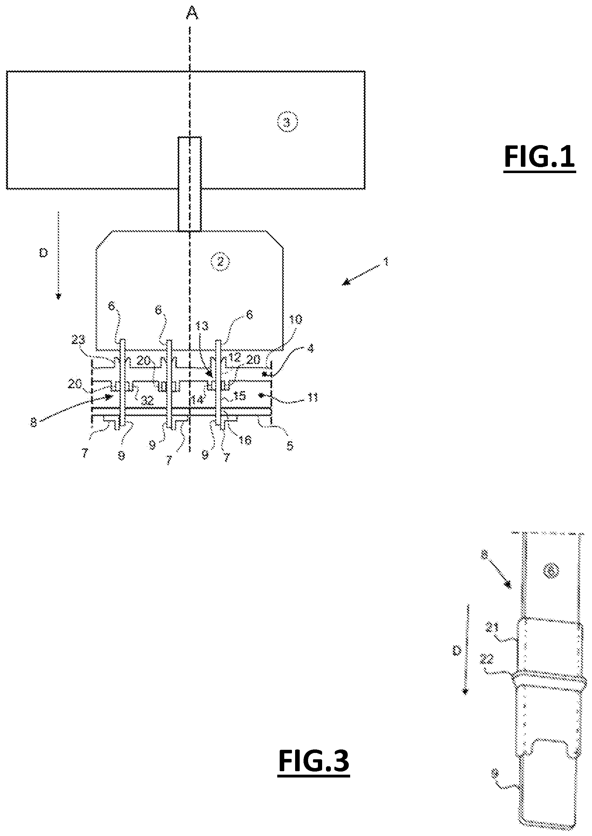

Sur la figure 1, un dispositif de pulsion d'air 1 est dédié à la génération d'un flux d'air à l'intérieur d'un canal d'une installation de ventilation, de chauffage et/ou de climatisation d'un véhicule automobile. Le dispositif de pulsion d'air 1 comporte un moteur 2 d'entraînement d'une turbine 3, un support 4 du moteur 2 et une carte de commande 5 du fonctionnement du moteur 2.

Le moteur 2 est notamment un moteur électrique à commutateur électronique, dont le rotor entraîne la turbine 3 en rotation et dont le stator est équipé de connecteurs 6 pour l'alimentation électrique de bobines du stator. Plus particulièrement, un dispositif de raccordement électrique entre le moteur 2 et la carte de commande 4 comprend des connecteurs 6 affectés au moteur 2 et des contacteurs 7 flexibles montés sur la carte de commande 4. La mise en contact deux à deux d'un connecteur 6 et d'un contacteur 7 procure la connexion électrique entre le moteur 2 et la carte de commande 4.

Les connecteurs 6, au nombre de trois sur les exemples de réalisation illustrés, sont chacun formés par une lamelle métallique. Les connecteurs 6 comportent une partie terminale 8 allongée dont l'extrémité distale 9 est prévue pour être placée en contact avec un contacteur 7 de la carte de commande 5 qui lui est affectée. La carte de commande 5 est notamment formée d'une plaque électriquement isolante équipée de composants électroniques et pourvue de pistes électriquement conductrices. Les contacteurs 7 équipant la carte de commande 5 sont flexibles et coopèrent respectivement avec les connecteurs 6 du moteur 2, pour former un circuit électrique reliant le moteur 2 à la carte de commande 5.

Les contacteurs 7 sont montés sur la carte de commande 5 sur sa face distale opposée à sa face proximale d'installation sur le support 4. La carte de commande 5 régule le fonctionnement du moteur 2, notamment en faisant varier le courant électrique alimentant le moteur 2 en énergie électrique de puissance.

Une partie du support 4 est agencée en platine 10 ménageant deux faces opposées du support 4 respectivement orientées vers la carte de commande 5 et vers le moteur 2. La carte de commande 5 est montée à une face distale du support 4, l'autre face proximale du support 4 étant orientée vers le moteur 2.

Un dissipateur thermique 11 est de préférence interposé entre la carte de commande 5 et le support 4, pour refroidir les composants électroniques équipant la carte de commande 5. Le support 4 comporte à son travers des canaux 12 ménageant des passages respectifs de la partie terminale 8 des connecteurs 6 vers les contacteurs 7.

Le support 4 est équipé d'au moins un organe d'étanchéité 13, pour interdire une infiltration d'eau depuis le moteur 2 vers la carte de commande 5. Chaque organe d'étanchéité 13 comporte une ouverture 14 disposée en prolongement d'un des canaux 12, pour ménager à son travers un passage de la partie terminale 8 d'un connecteur 6 vers un des contacteurs 7.

Par suite de sa traversée par un connecteur 6, l'organe d'étanchéité 13 enserre sa partie terminale 8 pour faire obstacle à un passage d'humidité depuis le moteur 2 vers la carte de commande 5. Dans ce contexte, la partie terminale 8 des connecteurs 6 est allongée en s'étendant suivant une direction d'extension D correspondante à la direction d'introduction D des connecteurs 6 à l'intérieur du support 4. Par suite d'une approche du support 4 vers le moteur 2, les connecteurs 6 traversent successivement le support 4 le long des canaux 12, puis les organes d'étanchéité 13 le long des ouvertures 14, puis le dissipateur thermique 11 le long de couloirs 15 ménagés à son travers, puis la carte de commande 5 le long d'orifices 16 ménagés à son travers. Les extrémités distales 9 des connecteurs 6 émergent alors au-delà de la carte de commande 5 et elles sont placées en contact avec les contacteurs 7 qui leurs sont respectivement affectés.

Sur la figure 1, les connecteurs 6 s'étendent parallèlement à l'axe de rotation A du moteur 2. La partie terminale 8 des connecteurs 6 s'étend en prolongement de leur partie proximale prévue pour le montage des connecteurs 6 sur le moteur 2. Par suite, les parties terminales 8 des connecteurs 6 sont introduites à l'intérieur des canaux 12 qui leurs sont respectivement affectés parallèlement à l'axe de rotation A du moteur 2, pour faire émerger l'extrémité distale 9 des connecteurs 6 au-delà de la face distale de la carte de commande 5.

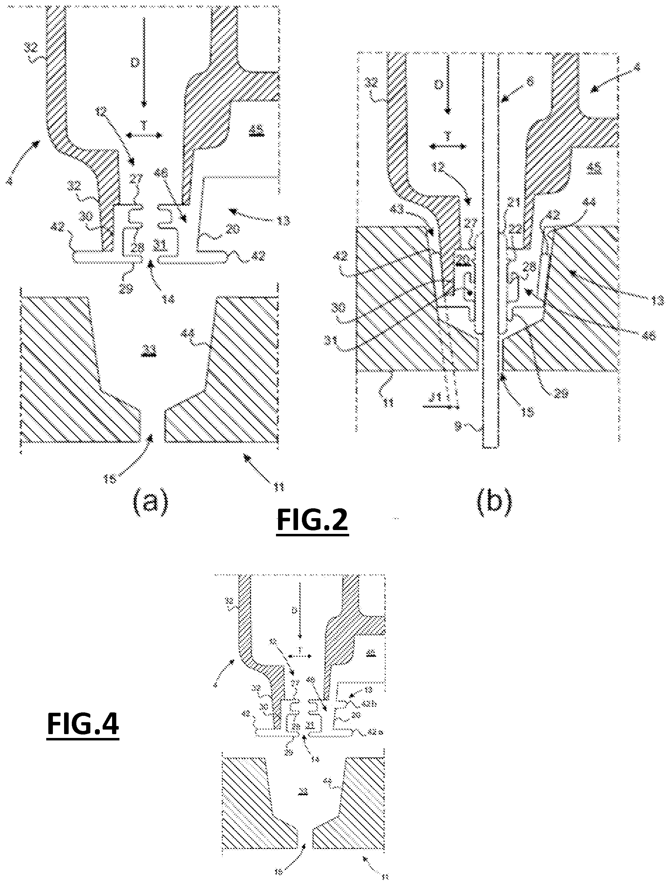

On pourra envisager que, sans sortir du contexte de l'invention, les parties terminales 8 des connecteurs 6 soient orientées transversalement (relativement à l'orientation Longitudinale-Transversale illustré par le repère sur la figure 2), orthogonalement plus spécifiquement, à l'axe de rotation A du moteur 2, dès lors que le support, éventuellement le dissipateur thermique, et la carte de commande sont agencés non pas dans l'axe du moteur, mais transversalement à celui-ci.

Les notions relatives de « proximale » et « distale » sont considérées vis-à-vis de positions opposées orientées vers l'extérieur du dispositif de pulsion d'air 1, respectivement du côté du moteur 2 et du côté de la carte de commande 5. Les notions relatives de « amont » et « aval » sont notamment considérées vis-à-vis de la direction d'introduction D des connecteurs 6 à l'intérieur des canaux 12, ou en d'autres termes vis-à-vis de la direction d'extension D de la partie terminale 8 des connecteurs 6 depuis leur partie proximale dédiée à leur montage sur le moteur 2. Les notions de « latéral » et « transversal » sont considérées relativement vis-à-vis d'une orientation donnée, telle que la direction d'extension D de la partie terminale 8 des connecteurs 6 et/ou en d'autres termes la direction d'introduction D des connecteurs 6 à l'intérieur du support 4 vers les contacteurs 7.

Les schémas (a) et (b) de la figure 2 illustrent des modalités d'interdiction d'une infiltration d'humidité vers la carte de commande 5, dans l'environnement d'un connecteur 6 donné. De telles modalités sont à transposer dans les environnements respectifs de chacun des connecteurs 6 équipant le moteur 2 et traversant chacun successivement le support 4, l'organe d'étanchéité 13 et le dissipateur thermique 11 pour s'étendre depuis le moteur 2 vers les contacteurs 7. L'organe d'étanchéité 13 procure non seulement l'étanchéité entre les connecteurs 6 et le support 4, mais aussi entre le support 4 et le dissipateur thermique 11. L'organe d'étanchéité 13 fait ainsi obstacle à une infiltration d'humidité d'une part à l'intérieur du canal 12 en provenance du moteur 2 et d'autre part à l'intérieur du couloir 15 en provenance du support 4.

Les organes d'étanchéité 13 consistent chacun en une masse en élastomère 20 disposée à l'intérieur d'un des canaux 12 ménagés à travers le support 4, à son débouché distal notamment. De telles masses en élastomère 20 sont traversées par les connecteurs 6 qui s'étendent à travers leur ouverture 14, pour procurer l'étanchéité entre le support 4 et les connecteurs 6. Les masses en élastomère 20 enserrent alors les connecteurs 6, en formant ainsi une barrière à l'encontre d'une infiltration d'humidité le long des canaux 12 vers la carte de commande 5.

L'organe d'étanchéité 13 comprend aussi des éléments d'étanchéité 42 s'étendant en saillie radiale de la masse en élastomère 20 de manière à être interposés entre le support 4 et le dissipateur thermique 11. Les éléments d'étanchéité 42 permettent d'interdire une infiltration d'humidité depuis le support 4 vers les couloirs 15 traversant le dissipateur thermique 11. Tel que représenté, au moins un premier élément d'étanchéité 42a donné est ménagé au débouché distal d'un canal 12 qui lui est affecté. Le premier élément d'étanchéité 42a est agencé en ailette s'étendant vers l'extérieur du canal 12 transversalement (selon la flèche T visible sur la figure 2) à la direction d'introduction D du connecteur 6 à l'intérieur du canal 12. On comprendra que les éléments d'étanchéité 42 peuvent comporter en outre au moins un deuxième élément d'étanchéité 42b (dans le mode de réalisation illustré sur la figure 4) qui s'étend sensiblement parallèlement au premier élément d'étanchéité 42a, à distance de celui-ci pour permettre le rabattement de l'un ou l'autre des éléments d'étanchéité 42 contre la paroi externe de la masse en élastomère. On a ainsi des éléments d'étanchéité 42 formés par des ailettes successives selon la direction D d'introduction des connecteurs.

Par ailleurs, le dissipateur thermique 11 comporte des logements 33 débouchant à la face proximale du dissipateur thermique 11 orientée vers la face distale du support 4.

Le fond des logements 33 est ouvert, pour former le couloir 15 ménageant le passage du connecteur 6 à travers le dissipateur thermique 11. Chaque logement 33 reçoit par emboîtement un fût 32 ménagé sur le support 4 en saillie de sa face distale, le fût 32 s'étendant suivant la direction d'introduction D du connecteur 6 à travers le support 4. Un jeu transversal J1 (visible sur le schéma (b) de la figure 2) est ménagé entre le logement 33 et le fût 32, pour former entre eux une réserve 43 lorsqu'ils sont emboîtés l'un avec l'autre. La réserve 43 forme un espace de réception de l'élément d'étanchéité 42 par suite de l'emboîtement du fût 32 à l'intérieur du logement 33 suivant la direction d'introduction D du connecteur 6 à l'intérieur du canal 12, ou en d'autres termes suivant la direction longitudinale D d'extension du fût 32 en saillie vers le dissipateur thermique 11. On comprendra que dans une variante de réalisation non représentée

Ainsi tel qu'illustré sur le schéma (b), l'introduction du fût 32 à l'intérieur de du logement 33 provoque un rabat de l'élément d'étanchéité 42 suivant une direction sensiblement opposée à la direction longitudinale D d'extension du fût 32 en saillie vers le dissipateur thermique 11. L'élément d'étanchéité 42 est rabattu vers l'intérieur du logement 33 en étant placé en compression transversale entre la paroi du dissipateur thermique 11 délimitant le logement 33 et la paroi du fût 32. Une barrière est ainsi formée à l'encontre d'une infiltration d'humidité depuis le support 4 vers le couloir 15 traversant le dissipateur thermique 11. Le logement 33 est évasé vers son débouché proximal orienté vers le support 4, pour ménager le long des parois du logement 33 une rampe 44 de compression progressive de l'élément d'étanchéité 42. Dans une variante non représentée, on pourrait prévoir que la paroi formant rampe 44 soit munie de lèvres successives telles qu'elles ont pu être définies dans les masses en élastomères. On comprend que pour que l'extrémité radiale de l'élément d'étanchéité 42 soit déformée à son introduction dans le logement 33, il convient que l'élément d'étanchéité s'étende transversalement sur une dimension plus grande que la dimension transversale du logement 33 au niveau de son débouché proximal évasé. De la sorte, la mise en compression de l'élément d'étanchéité 42 entre le logement 33 et le fût 32 est ainsi certifiée et procure efficacement l'étanchéité entre le support 4 et le dissipateur thermique 11.

On relèvera aussi que les emboîtements des différents fûts 32 à l'intérieur des logements 33 qui leur sont affectés sont ainsi des emboîtements souples. De tels emboîtements souples autorisent un centrage individuel des fûts 32 à l'intérieur des logements 33, certifiant l'étanchéité obtenue par l'intermédiaire de chacun des éléments d'étanchéité 42 et cela malgré la multiplicité des centrages collectivement des fûts 32 à l'intérieur des logements 33 qui leur sont affectés.

L'élément d'étanchéité 42 est issu de la masse en élastomère 20, avec laquelle l'élément d'étanchéité 42 forme un ensemble monobloc. Plus particulièrement, le premier élément d'étanchéité 42a et une lèvre distale 29 de la masse en élastomère 20 sont incorporés l'un à l'autre en un même corps en élastomère. Le premier élément d'étanchéité 42 prolonge transversalement la lèvre distale 29 vers l'extérieur du canal 12, ledit corps en élastomère étant incorporé à la masse en élastomère 20 à son extrémité distale. On relèvera que l'architecture monobloc de la masse en élastomère 20 est apte à procurer la double étanchéité recherchée entre le connecteur 6 et le support 4 d'une part, et entre le support 4 et le dissipateur thermique 11 d'autre part.

L'incorporation de l'élément d'étanchéité 42 à la masse en élastomère 20 permet ainsi d'organiser la masse en élastomère 20 selon une architecture monobloc autorisant son obtention par moulage individuel, ou de préférence son surmoulage sur le support 4. L'ouverture 14 ménagée à travers l'organe d'étanchéité 13 autorise le passage du connecteur 6 à travers la lèvre distale 29 de la masse en élastomère 20.

Par ailleurs, on peut prévoir un organe en élastomère 45 s'étendant en interposition entre les faces en regard du support 4 et du dissipateur thermique 11 et formant un organe de jonction reliant entre elles les masses en élastomère 20 avec lesquelles l'organe en élastomère 45 forme un ensemble d'étanchéité monobloc. Ainsi, notamment dans le cas où cet ensemble d'étanchéité 13 est moulé individuellement et rapporté sur le support 4, par scellement par exemple, la pluralité de masses en élastomère 20 de cet ensemble d'étanchéité 13 peuvent être manipulés en un seul bloc par un opérateur. Pour autoriser le passage de l'organe en élastomère 45 de l'une à l'autre des masses en élastomère 20, le fût 32 comporte un dégagement 46 latéral ménagé à travers la paroi du fût 32 à son extrémité distale. La masse en élastomère 20 déborde transversalement hors du fût 32 à travers le dégagement 46. Ainsi, l'organe en élastomère 45 peut s'étendre sans obstacle entre les différentes masses en élastomère 20 qu'il relie les unes aux autres.

Les masses en élastomère 20 comportent de préférence une pluralité de lèvres 27,28,29 ménagées transversalement à l'intérieur de l'ouverture 14. Sur l'exemple de réalisation illustré sur les schémas de la figure 3, les lèvres 27,28,29 sont au nombre de trois et sont disposées à distance longitudinale l'une de l'autre le long de l'ouverture 14. Une lèvre proximale 27 est ménagée au débouché proximal de l'ouverture 14. Une lèvre intermédiaire 28 est interposée entre la lèvre proximale 27 et la lèvre distale 29 suivant la direction d'extension longitudinale de l'ouverture 14. Ainsi, le connecteur 6 traverse successivement la lèvre proximale 27, la lèvre intermédiaire 28 et la lèvre distale 29, en s'étendant le long de l'ouverture 14.

Sur la figure 3, la partie terminale 8 du connecteur 6 est pourvue d'un corps 21 avantageusement rapporté par surmoulage autour d'une zone du connecteur 6 destinée à être enserrée par l'organe d'étanchéité 13. Le corps 21 est notamment issu d'un matériau thermodurcissable, procurant une rigidification du connecteur 6 à l'encontre de sa déformation.

Dans ce contexte et en se reportant sur la figure 2, l'épaisseur du corps 21 est significativement supérieure à l'épaisseur de l'extrémité distale 9 du connecteur 6. Par ailleurs, le corps 21 comporte à sa périphérie un bourrelet 22 de coincement de la partie terminale 8 du connecteur 6 à l'intérieur de l'organe d'étanchéité 13, tel qu'illustré sur le schéma (b) de la figure 2. Tel que cela vient d'être décrit, le corps 21 forme une interface d'enserrement du connecteur 6 par la masse en élastomère 20. L'épaisseur du corps 21 est supérieure à la distance de séparation, dans la direction D, entre deux bords opposés des lèvres 27,28,29. Par ailleurs, l'épaisseur de l'extrémité distale 9 du connecteur 6 est significativement inférieure à cette distance de séparation entre deux bords opposés des lèvres 27,28,29.

On relèvera que la distance de séparation entre deux bords opposés des lèvres 27,28,29 est de préférence similaire pour l'ensemble des lèvres. Il est cependant compris que la distance de séparation D3 entre deux bords opposés d'une quelconque lèvre 27,28,29 peut être potentiellement différente de celle d'une quelconque autre lèvre.

Par suite de l'introduction du connecteur 6 à l'intérieur de l'ouverture 14 tel qu'illustré sur le schéma (b) de la figure 2, l'extrémité distale 9 du connecteur est apte à être introduite à l'intérieur de l'ouverture 14 sans risque de détériorer les lèvres 27,28,29. Le corps 21 repousse successivement les lèvres 27,28,29 qui s'effacent de par leur souplesse en autorisant la traversée de l'ouverture 14 par le connecteur 6. De par sa conformation, sa formation par moulage et/ou la matière dont il est issu, le corps 21 n'est pas tranchant. Dans ces conditions, le corps n'est pas blessant pour les lèvres 27,28,29 lorsqu'il les repousse. Les lèvres 27,28,29 sont alors placées en interposition entre la paroi de l'ouverture 14 et le corps 21.

La masse en élastomère 20 est logée dans une alvéole 30 du support 4 ménagée au débouché distal du canal 12. La masse en élastomère est ainsi maintenue en conformation à l'intérieur du canal, transversalement notamment, y compris lorsqu'elle est traversée par le connecteur 6. Par suite de la mise en interposition des lèvres 27,28,29 entre le corps 21 et le support 4, les lèvres sont comprimées par le corps 21 avec pour effet de procurer une étanchéité efficace entre le support 4 et le connecteur 6. Le connecteur 6 est fermement enserré par la masse en élastomère 20, par suite de la mise en compression transversale T du corps 21 à l'intérieur de l'ouverture 14. La masse en élastomère 20 comporte une chambre 31 disposée longitudinalement L entre la lèvre intermédiaire 28 et la lèvre distale 29 en compression. La déformation de la lèvre intermédiaire 28 provoque son effacement contre la paroi de l'ouverture 14, en s'étendant longitudinalement L à distance de la lèvre distale 29. La chambre 31 forme ainsi un obstacle à une infiltration par capillarité d'une éventuelle humidité depuis la lèvre intermédiaire 28 vers la lèvre distale 29.

## Revendications

1. Dispositif de pulsion d'air (1) comportant un support (4) sur lequel sont installés un moteur (2) électrique et une carte de commande (5) électronique régulant le fonctionnement du moteur (2), le moteur (2) étant équipé d'au moins un connecteur (6) allongé dont une partie terminale (8) traverse le support (4) le long d'un canal (12) pour que l'extrémité distale (9) dudit connecteur (6) coopère avec un contacteur (7) équipant la carte de commande (5), dans lequel le support est équipé d'au moins un organe d'étanchéité (13) enserrant individuellement la partie terminale (8) du connecteur (6) traversant l'organe d'étanchéité (13) le long d'une ouverture (14) ménagée en prolongement du canal (12), un dissipateur thermique (11) étant par ailleurs interposé entre le support et la carte de commande et comportant au moins un couloir (15) de passage dudit connecteur (6) à son travers, ledit couloir (15) étant disposé dans le prolongement dudit canal (12), et dans lequel l'organe d'étanchéité (13) comprend des éléments d'étanchéité (42) interposés entre le support (4) et le dissipateur thermique (11) en prolongement transversal vers l'extérieur dudit canal (12), **caractérisé en ce que** le dissipateur thermique (11) comporte au moins un logement (33) de réception d'un fût (32) incorporé au support (4) et s'étendant en saillie vers la carte de commande (5), l'évidement dudit fût (32) ménageant ledit canal (12).

2. Dispositif de pulsion d'air (1) selon la revendication 1, **caractérisé en ce que** les éléments d'étanchéité (42) comportent au moins un premier élément d'étanchéité (42a) ménagé au débouché distal dudit canal (12) en étant orienté vers le dissipateur thermique (11) et en étant pourvu d'une dite ouverture (14).

3. Dispositif de pulsion d'air (1) selon l'une des revendications précédentes, **caractérisé en ce que** le fond du logement (33) est ouvert à la face distale du dissipateur thermique (11) orienté vers la carte de commande (5) en ménageant ledit couloir (15).

4. Dispositif de pulsion d'air (1) selon l'une quelconque des revendications précédentes, **caractérisé en ce que** les éléments d'étanchéité (42) sont interposés en compression entre la paroi extérieure du fût (32) et la paroi du dissipateur thermique (11) délimitant le logement (33).

5. Dispositif de pulsion d'air (1) selon l'une quelconque des revendications précédentes, **caractérisé en ce que** le logement (33) est évasé vers son débouché proximal orienté vers le support (4), en ménageant des rampes de compression progressive des éléments d'étanchéité (42) entre la paroi extérieure du fût (32) et la paroi du dissipateur thermique (11) délimitant le logement (33).

6. Dispositif de pulsion d'air (1) selon l'une quelconque des revendications 1 à 5, **caractérisé en ce que** les éléments d'étanchéité (42) sont agencés en ailettes issues d'un matériau élastomère et s'étendant vers l'extérieur du canal (12) transversalement à la direction d'introduction (D) du connecteur (6) à l'intérieur du canal (12).

7. Dispositif de pulsion d'air (1) selon l'une quelconque des revendications 1 à 6, **caractérisé en ce que** plusieurs masses en élastomère (20) formant organe d'étanchéité (13) sont respectivement disposées au moins en partie à l'intérieur de canaux (12) et sont chacune munie d'une dite ouverture (14).

8. Dispositif de pulsion d'air (1) selon la revendication 7, **caractérisé en ce que** les éléments d'étanchéité (42) sont issus des masses en élastomère (20).

9. Dispositif de pulsion d'air (1) selon l'une quelconque des revendications 7 et 8, **caractérisé en ce que** chacune des masses en élastomère (20) comporte au moins une lèvre (27,28,29) ménagée à l'intérieur de l'ouverture (14).

10. Dispositif de pulsion d'air (1) selon la revendication 9, **caractérisé en ce que** les éléments d'étanchéité (42) sont respectivement ménagés en prolongement transversal (T) de lèvres distales (29) des masses en élastomère (20) disposées au débouché distal des canaux (12).

11. Dispositif de pulsion d'air (1) selon l'une quelconque des revendications 1 à 10, **caractérisé en ce que** l'organe d'étanchéité (13) comprend un organe en élastomère (45) s'étendant en interposition entre les faces en regard du support (4) et du dissipateur thermique (11).

12. Dispositif de pulsion d'air (1) selon la revendication 11, lorsqu'elle dépend d'au moins la revendication 7, **caractérisé en ce que** l'organe en élastomère (45) est incorporé aux masses en élastomère (20) en les reliant entre elles le long des faces en regard du support (4) et du dissipateur thermique (11).

13. Dispositif de pulsion d'air (1) selon la revendication 12, **caractérisé en ce que** ledit fût (32) comporte un dégagement (46) latéral ménagé à travers sa paroi, le dégagement (46) ménageant un passage pour l'organe en élastomère (45) en prise sur une masse en élastomère (20).

14. Système de chauffage, de ventilation et/ou de climatisation d'un véhicule automobile comprenant au moins un dispositif de pulsion d'air conforme à au moins l'une des revendications précédentes.

## Patentansprüche

1. Gebläsevorrichtung (1), die einen Träger (4) aufweist, auf den ein Elektromotor (2) und eine den Betrieb des Motors (2) regelnde elektronische Steuerkarte (5) montiert sind, wobei der Motor (2) mit mindestens einem länglichen Verbinder (6) ausgestattet ist, von dem ein Endbereich (8) den Träger (4) entlang eines Kanals (12) durchquert, damit das distale Ende (9) des Verbinders (6) mit einem in die Steuerkarte (5) eingebauten Kontaktelement (7) zusammenwirkt, wobei der Träger mit mindestens einem Dichtungsorgan (13) ausgestattet ist, das einzeln den Endbereich (8) des Verbinders (6) umschließt, der das Dichtungsorgan (13) entlang einer Öffnung (14) durchquert, die in Verlängerung des Kanals (12) vorgesehen ist, wobei ein Wärmeableiter (11) außerdem zwischen den Träger und die Steuerkarte eingefügt ist und mindestens einen Gang (15) zum Durchlass des Verbinders (6) durch ihn hindurch aufweist, wobei der Gang (15) in der Verlängerung des Kanals (12) angeordnet ist, und wobei das Dichtungsorgan (13) Dichtungselemente (42) enthält, die zwischen den Träger (4) und den Wärmeableiter (11) in Querverlängerung zur Außenseite des Kanals (12) eingefügt sind, **dadurch gekennzeichnet, dass** der Wärmeableiter (11) mindestens eine Aufnahme (33) zur Aufnahme eines Schafts (32) aufweist, der in den Träger (4) eingebaut ist und sich zur Steuerkarte (5) vorstehend erstreckt, wobei der Kanal (12) in der Aushöhlung des Schafts (32) angeordnet ist.

2. Gebläsevorrichtung (1) nach Anspruch 1, **dadurch gekennzeichnet, dass** die Dichtungselemente (42) mindestens ein erstes Dichtungselement (42a) aufweisen, das an der distalen Ausmündung des Kanals (12) vorgesehen ist, indem es zum Wärmeableiter (11) ausgerichtet ist und indem es mit einer Öffnung (14) versehen ist.

3. Gebläsevorrichtung (1) nach einem der vorhergehenden Ansprüche, **dadurch gekennzeichnet, dass** der Boden der Aufnahme (33) an der zur Steuerkarte (5) ausgerichteten distalen Seite des Wärmeableiters (11) offen ist, indem er den Gang (15) ausspart.

4. Gebläsevorrichtung (1) nach einem der vorhergehenden Ansprüche, **dadurch gekennzeichnet, dass** die Dichtungselemente (42) komprimiert zwischen die Außenwand des Schafts (32) und die Wand des Wärmeableiters (11) eingefügt sind, die die Aufnahme (33) begrenzt.

5. Gebläsevorrichtung (1) nach einem der vorhergehenden Ansprüche, **dadurch gekennzeichnet, dass** die Aufnahme (33) zu ihrer zum Träger (4) ausgerichteten proximalen Ausmündung hin verbreitert ist, indem sie Rampen progressiver Komprimierung der Dichtungselemente (42) zwischen der Außenwand des Schafts (32) und der die Aufnahme (33) begrenzenden Wand des Wärmeableiters (11) bildet.

6. Gebläsevorrichtung (1) nach einem der Ansprüche 1 bis 5, **dadurch gekennzeichnet, dass** die Dichtungselemente (42) in Rippen gestaltet sind, die von einem Elastomermaterial stammen und sich zur Außenseite des Kanals (12) quer zur Einführrichtung (D) des Verbinders (6) ins Innere des Kanals (12) erstrecken.

7. Gebläsevorrichtung (1) nach einem der Ansprüche 1 bis 6, **dadurch gekennzeichnet, dass** mehrere ein Dichtungsorgan (13) formende Massen aus Elastomermaterial (20) zumindest zu Teil im Inneren von Kanälen (12) angeordnet und je mit einer Öffnung (14) versehen sind.

8. Gebläsevorrichtung (1) nach Anspruch 7, **dadurch gekennzeichnet, dass** die Dichtungselemente (42) von den Massen aus Elastomermaterial (20) stammen.

9. Gebläsevorrichtung (1) nach einem der Ansprüche 7 und 8, **dadurch gekennzeichnet, dass** jede der Massen aus Elastomermaterial (20) mindestens eine Lippe (27,28,29) aufweist, die im Inneren der Öffnung (14) vorgesehen ist.

10. Gebläsevorrichtung (1) nach Anspruch 9, **dadurch gekennzeichnet, dass** die Dichtungselemente (42) je in Querverlängerung (T) von distalen Lippen (29) der Massen aus Elastomermaterial (20) vorgesehen sind, die an der distalen Ausmündung der Kanäle (12) angeordnet sind.

11. Gebläsevorrichtung (1) nach einem der Ansprüche 1 bis 10, **dadurch gekennzeichnet, dass** das Dichtungsorgan (13) ein Organ aus Elastomermaterial (45) enthält, das sich in Zwischenfügung zwischen den gegenüberliegenden Seiten des Trägers (4) und des Wärmeableiters (11) erstreckt.

12. Gebläsevorrichtung (1) nach Anspruch 11, wenn er mindestens von Anspruch 7 abhängt, **dadurch gekennzeichnet, dass** das Organ aus Elastomermaterial (45) in die Massen aus Elastomermaterial (20) eingearbeitet ist, indem es sie entlang der gegenüberliegenden Seiten des Trägers (4) und des Wärmeableiters (11) miteinander verbindet.

13. Gebläsevorrichtung (1) nach Anspruch 12, **dadurch gekennzeichnet, dass** der Schaft (32) einen seitlichen Freiraum (46) aufweist, der durch seine Wand hindurch vorgesehen ist, wobei der Freiraum (46) einen Durchlass für das Organ aus Elastomermaterial (45) in Eingriff auf einer Masse aus Elastomermaterial (20) ausspart.

14. Heizungs-, Lüftungs- und/oder Klimaanlage eines Kraftfahrzeugs, die mindestens eine Gebläsevorrichtung nach mindestens einem der vorhergehenden Ansprüche enthält.

## Claims

1. Air pulsing device (1) comprising a support (4) on which there are installed an electric motor (2) and an electronic control board (5) regulating the operation of the motor (2), the motor (2) being equipped with at least one elongate connector (6), a terminal part (8) of which passes through the support (4) along a channel (12) for the distal end (9) of said connector (6) to cooperate with a contactor (7) with which the control board (5) is equipped, wherein the support is equipped with at least one sealing member (13) individually gripping the terminal part (8) of the connector (6) passing through the sealing member (13) along an opening (14) formed in extension of the channel (12), a heat sink (11) being also interposed between the support and the control board and comprising at least one passageway (15) for said connector (6) to pass through it, said passageway (15) being disposed in the extension of said channel (12), and wherein the sealing member (13) comprises sealing elements (42) interposed between the support (4) and the heat sink (11) in transverse extension outward from said channel (12), **characterized in that** the heat sink (11) comprises at least one housing (33) for receiving a socket (32) incorporated in the support (4) and protruding towards the control board (5), the recess of said socket (32) forming said channel (12).

2. Air pulsing device (1) according to Claim 1, **characterized in that** the sealing elements (42) comprise at least one first sealing element (42a) formed at the distal outlet of said channel (12) by being oriented towards the heat sink (11) and by being provided with one said opening (14).

3. Air pulsing device (1) according to one of the preceding claims, **characterized in that** the bottom of the housing (33) is open at the distal face of the heat sink (11) oriented towards the control board (5) in forming said passageway (15).

4. Air pulsing device (1) according to any one of the preceding claims, **characterized in that** the sealing elements (42) are interposed compressed between the outer wall of the socket (32) and the wall of the heat sink (11) delimiting the housing (33).

5. Air pulsing device (1) according to any one of the preceding claims, **characterized in that** the housing (33) is flared towards its proximal outlet oriented towards the support (4), forming progressive ramps for compression of the sealing elements (42) between the outer wall of the socket (32) and the wall of the heat sink (11) delimiting the housing (33).

6. Air pulsing device (1) according to any one of Claims 1 to 5, **characterized in that** the sealing elements (42) are arranged as fins made of an elastomer material and extending outward from the channel (12) transversely to the direction of introduction (D) of the connector (6) into the channel (12).

7. Air pulsing device (1) according to any one of Claims 1 to 6, **characterized in that** several elastomer masses (20) forming the sealing member (13) are respectively disposed at least partly inside channels (12) and are each provided with one said opening (14).

8. Air pulsing device (1) according to Claim 7, **characterized in that** the sealing elements (42) are made of elastomer masses (20).

9. Air pulsing device (1) according to either one of Claims 7 and 8, **characterized in that** each of the elastomer masses (20) comprises at least one lip (27, 28, 29) formed inside the opening (14).

10. Air pulsing device (1) according to Claim 9, **characterized in that** the sealing elements (42) are respectively formed in transverse extension (T) of distal lips (29) of the elastomer masses (20) disposed at the distal outlet of the channels (12).

11. Air pulsing device (1) according to any one of Claims 1 to 10, **characterized in that** the sealing member (13) comprises an elastomer member (45) extending interposed between the facing faces of the support (4) and of the heat sink (11).

12. Air pulsing device (1) according to Claim 11, when it depends on at least Claim 7, **characterized in that** the elastomer member (45) is incorporated in the elastomer masses (20) linking them to one another along the facing faces of the support (4) and of the heat sink (11).

13. Air pulsing device (1) according to Claim 12, **characterized in that** said socket (32) comprises a lateral clearance (46) formed through its wall, the clearance (46) forming a passage for the elastomer member (45) engaged on an elastomer mass (20).

14. Heating, ventilation and/or air conditioning system of a motor vehicle comprising at least one air pulsing device according to at least one of the preceding claims.
